# EUROPEAN PATENT SPECIFICATION

(11) **EP 2 147 900 B1**
(45) Date of publication and mention of the grant of the patent: **23.07.2014**
(21) Application number: 08740043.8
(22) Date of filing: 08.04.2008
(51) Int. Cl.: C03B 33/023, B28D 1/22

(54) **SCRIBING APPARATUS AND METHOD**
RITZVORRICHTUNG UND VERFAHREN
APPAREIL ET PROCÉDÉ DE TRAÇAGE

(30) Priority: 12.04.2007 JP 2007105372
(43) Date of publication of application: 27.01.2010
(73) Proprietor: Mitsuboshi Diamond Industrial Co., Ltd., Suita-city, Osaka 564-0044 (JP); THK Intechs Co., Ltd., Tokyo 176-0012 (JP)
(72) Inventor: MAEKAWA, Kazuya, Suita-shi Osaka 564-0044 (JP); SHISHIDO, Yoshiaki, Tokyo 176-0012 (JP)
(74) Representative: Grünecker, Kinkeldey, Stockmair & Schwanhäusser
(86) International application number: PCT/JP2008/056940
(87) International publication number: WO 2008/129943

(56) References cited:
- WO-A1-2005/113212
- JP-A- 11 157 860
- JP-A- 2003 137 576

## Description

### TECHNICAL FIELD

The present invention relates to a scribing apparatus as per the preamble of claim 1 and a scribing method as per the preamble of claim 3 for rolling a scribing wheel on a surface of a substrate of brittle material to scribe a line and form a vertical crack (median crack) extending in a thickness direction with the scribed line. Such an apparatus and such a method are known from WO 2005/113212 A1.

### BACKGROUND ART

In the recent technical innovation, there has been produced a flat panel display (hereinafter referred to as "FPD") that is space saving and has flat screen. The technique for realizing the FPD includes a liquid display having a special material called liquid enclosed between two glass substrates, an organic electroluminescence display having light emitters deposited on a glass substrate and a plasma display having high-pressure noble gas enclosed between two glass substrates.

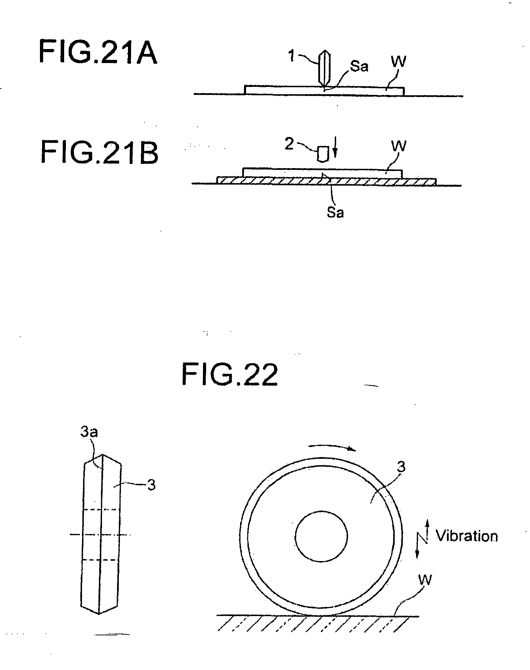

The glass substrate used in the FPD is formed into a unit substrate by forming a scribe line on a surface of the glass large substrate (mother substrate), breaking the glass substrate along the scribe line and cutting into a unit substrate of predetermined dimensions. More specifically, as illustrated in Figs. 21A and 21B, the mother substrate W is cut into the unit substrate through a scribe line forming step of forming the scribe line Sa on the surface of the mother substrate W by rolling a scribing wheel 1 and a break step of pushing a break bar 2 against an opposite surface to the surface of the mother substrate W on which the scribe line Sa is formed and making a vertical crack reach the opposite surface. In the case of the liquid display having two glass substrates bonded to each other, the scribe line forming step and the break step are performed in each of the two glass substrates.

Recently, the glass substrate used in the FPD becomes thinner or, for example, has a thickness of 0.7 mm, 0.5 mm or the like and becomes harder. It is expected that the glass substrate will become much thinner and harder in future. However, if the break bar is used to tap the glass substrate in the break step after the scribe line forming step, like in the conventional cutting method, the cut surface of the glass substrate may be broken due to the hardness of the glass substrate and there may occur chipping.

In order to solve this problem, it is necessary to make a deeper vertical crack in the glass substrate when forming the scribe line. When the vertical crack is made deeper, the glass substrate can be divided without break step.

As the scribing method capable of making a deeper vertical crack, one of the applicants has developed a scribing method for rolling a disc-shaped scribing wheel 3 on the surface of a glass substrate W and vibrating the scribing wheel 3 simultaneously, as illustrated in Fig. 22 (see Patent documents JP 9278473 and JP 11157860). In this scribing method, the scribing wheel 3 used and given vibration is a normal wheel (hereinafter referred to as "N wheel") having a smooth circumference ridge line 3a.

The other applicant has proposed, as the scribing method capable of forming a deeper vertical crack, a scribing method using a disc-shaped scribing wheel 4 (hereinafter referred to as "P wheel") having plural grooves 6 and projections 7 formed alternately in the circumferential direction with a give pitch P on the circumference ridge line 4a of the scribing wheel 4, as illustrated in Fig. 23 (see Patent document JP 3074143 B). In this scribing method, the P wheel is not vibrated. When the P wheel rolls on the glass substrate, the projections 7 on the circumference ridge line 4a of the P wheel bite into the glass substrate and therefore, the deeper crack can be formed in the glass substrate without vibration of the wheel.

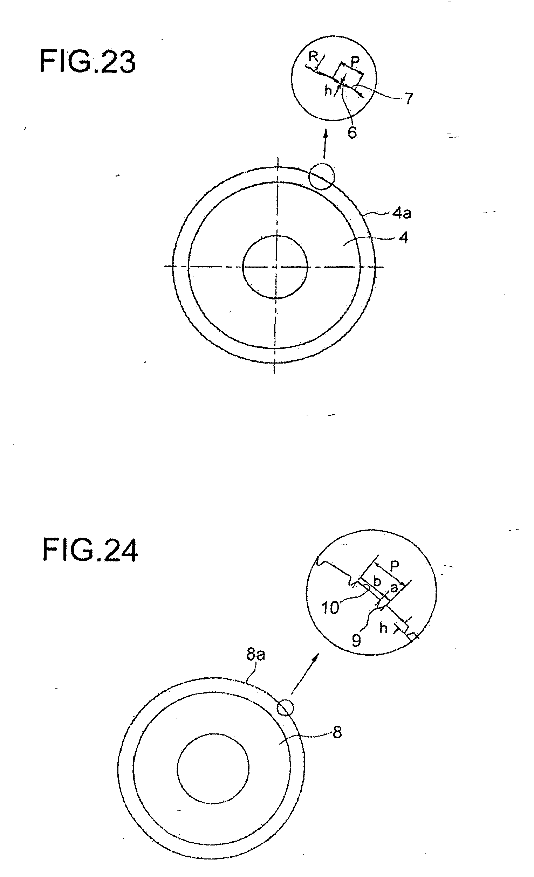

The applicant has also proposed, as illustrated in Fig. 24, a scribing wheel 8 and a scribing method using the scribing wheel 8 (hereinafter referred to as "A wheel") having projections 10 and notches 9 formed with a predetermined pitch P on the circumference ridge line 8a of the scribing wheel 8, the length a of each notch 9 in the circumferential direction being shorter than the length b of each projection 10 in the circumferential direction (see Patent document WO 2004/004700). Also in this cribbing method, as the projections 10 of the circumference ridge line 8a of the A wheel bite into the glass substrate, the A wheel is not vibrated. The A wheel is classified into an intermediate wheel category between the N wheel and the P wheel. The number of the notches 9 of the A wheel is not so large as that of the P wheel.

### DISCLOSURE OF THE INVENTION

### PROBLEM TO BE SOLVED BY THE INVENTION

In the scribing method of scribing while vibrating the N wheel, if the N wheel rolls on the glass substrate without sliding, the deeper vertical crack can be formed and damage to the glass substrate (lateral crack (horizontal crack) in the surface of the glass substrate) can be reduced. However, as the glass substrate becomes harder, the N wheel often tends to slide on the surface of the glass substrate without rolling thereon because the circumference ridge line of the N wheel is smooth. When the N wheel slides, the vertical crack can not be formed stably even if it is vibrated.

The applicants made repeated experiments for making the N wheel bite in the glass substrate and roll thereon. As a result, is has been found that when the N wheel vibrates at high frequencies of 15 kHz to 20 kHz, the N wheel can roll while biting in the glass substrate thereby to form the deeper vertical crack. However, when the N wheel vibrates at high frequencies, the N wheel is worn more. The N wheel can also bite into the glass substrate by moving the N wheel onto the glass substrate from outside of the glass substrate. However, when the N wheel moves onto the glass substrate, the N wheel causes damage to the glass substrate. If the N wheel is placed inside the glass substrate to prevent the damage and the scribe line is formed from the position where the N wheel is placed, the N wheel cannot bit the substrate enough and the N wheel slides. Thus, there is a limitation in the scribing method for scribing the hard glass substrate while vibrating the N wheel.

On the other hand, in the scribing method using the P wheel, as the projections of the circumference ridge line of the P wheel bite into the glass substrate only by being pressed against the glass substrate, the P wheel rolls on the glass substrate surely. Thereby, the deeper vertical crack can be formed in the glass substrate without vibration of the scribing wheel. However, as compared with the N wheel, the projections of the P wheel cause damage to the glass substrate and a lateral crack is sometimes caused in the surface of the glass substrate.

In the scribing method using the A wheel, occurrence of the damage to the glass substrate (horizontal crack in the surface of the glass substrate) can be reduced more as compared with the P wheel. However, the vertical crack formed by the A wheel cannot be formed deeper than that formed by the P wheel. If a load given to the A wheel is made larger, the vertical crack can be formed deeper. But, there is a limit because the damage to the glass substrate also becomes larger.

Then, the present invention has an object to provide a scribing apparatus and a scribing method capable of forming a deeper vertical crack without damage to a brittle material substrate such as hard glass substrate (lateral crack in the surface of the brittle material).

### MEANS FOR SOLVING THE PROBLEM

The above-mentioned problems are solved by a scribing apparatus comprising the combination of features of independent claim 1 and by a scribing method comprising the combination of features of independent claim 3.

A preferred embodiment of the invention is disclosed in dependent claim 2. 1

### EFFECT OF THE INVENTION

In the scribing apparatus of claim 1 and the scribing method of claim 3, the A wheel used has no problem in terms of stability in biting into the brittle material substrate and the A wheel is vibrated. Accordingly, no damage is caused to the brittle material substrate and the vertical crack can be formed deeper. Conventionally, dividing of the brittle material substrate needs the scribing apparatus and breaking apparatus. However, the deeper vertical crack is formed by the scribing apparatus, and the breaking apparatus can be eliminated. For users, there is a merit that the scribing apparatus can be supplied as less expensive equipment.

The A wheel vibrates with lower load, larger amplitude and lower frequencies than those of the conventional N wheel. Therefore, no damage is caused to the brittle material substrate and the vertical crack can be formed deeper.

As the vibration actuator has a giant magnetostrictive element, it is possible to obtain a relatively large displacement over a wide frequency range stably. Besides, as the stable amplitude can be obtained even when the frequency varies, the vibration of the scribing wheel can be stabilized.

In the preferred embodiment of claim 2, the spline device having the spline shaft and the spline outer cover can pass to the scribing wheel vibration in the desired direction of the vibration actuator without loss and the vibration other than that in the desired direction of the vibration actuator can be suppressed.

### BRIEF DESCRIPTION OF THE DRAWINGS

Fig. 1 is a schematic perspective view of a scribing apparatus according to a first exemplary embodiment of the present invention.
Fig. 2 is a front view illustrating a scribe head and a Z axis moving mechanism.
Fig. 3 is a cross sectional view of the scribe head.
Fig. 4 is a cross sectional view of another example of the scribe head.
Fig. 5 is a cross sectional view of a vibration actuator.
Fig. 6 is a graph showing an example of vibration characteristic of a giant magnetostrictive element.
Fig. 7 is a perspective view of a spline device.
Fig. 8 is a front view of a scribing wheel seen in the traveling direction.
Fig. 9 is a side view of the scribing wheel.
Fig. 10 is a partial enlarged view of Fig. 9.
Fig. 11 is a partial enlarged view of Fig. 9.
Fig. 12 is a view illustrating another example of the scribing wheel.
Fig. 13 is a view illustrating another example of a notch of the scribing wheel.
Fig. 14 is a view illustrating comparison of characteristics of the scribing wheel.
Fig. 15 illustrates experimental data of scribing a hard glass of t = 0.7 mm.
Fig. 16 illustrates experimental data of scribing a hard glass of t = 0.5 mm.
Fig. 17 illustrates experimental data of crosscutting a hard glass of t = 0.5 mm (connection type scribe head).
Fig. 18 illustrates experimental data of crosscutting a hard glass of t = 0.5 mm (separation type scribe head).
Fig. 19 illustrates experimental data for comparison of scribe performances of respective heads.
Fig. 20 illustrates experimental data of scribing a hard glass of t = 0.5 mm with a Sunmap (product name) of t = 0.2 mm deposited thereon.
Figs. 21A and 21B illustrate steps of a conventional scribing method.
Fig. 22 is a view of a conventional N wheel.
Fig. 23 is a view of a conventional P wheel.
Fig. 24 is a view of a conventional A wheel.

### EXPLANTION OF REFERENCE NUMERALS

- 11: table
- 13: Y axis moving mechanism (moving mechanism)
- 24, 44: scribe head
- 25: X axis moving mechanism (moving mechanism)
- 32: load cylinder (pressure mechanism)
- 34: scribing wheel
- 35: vibration actuator
- 36: main body
- 37: spline shaft
- 37b: ball rolling groove (rolling-element rolling groove)
- 38: holder
- 39: spline outer cover
- 46: giant magnetostrictive element
- 52: ball (rolling element)
- 54a: ball circulation passage (rolling-element circulation passage)
- 60: rotational axis
- 61: cone frustum
- 62: circumference ridge line
- 64: notch
- 65: projection
- W: brittle material substrate

### MODE FOR CARRYING OUT THE INVENTION

With reference to the attached drawings, exemplary embodiments of the present invention will be described below.

As to the form, material, use and size of the brittle material substrate as an object to work in the present invention, there is no particular limitation. For example, the substrate may be of a single substrate, or of two or more substrates bonded to each other, in which case, a thin film or semiconductor material may be adhered thereto or included therein. If the thin film or the like is adhered to the surface of the substrate, such substrate can be used as an object to scribe by the scribing apparatus.

The material of the brittle material of the present invention includes glass, ceramics, semiconductor (silicon and the like), sapphire and the like, and the substrate may be used as a flat panel display such as a crystal liquid display panel, a plasma display panel, an organic EL display panel or a field emission type display panel (FED).

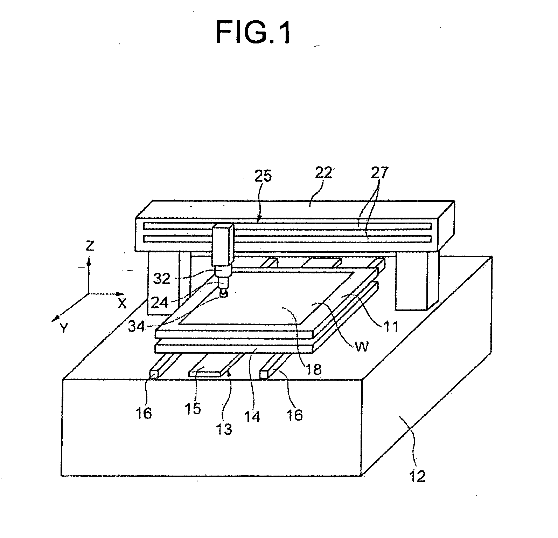

Fig. 1 is a schematic perspective view of a scribing apparatus according to an embodiment of the present invention. A brittle material substrate W such as a glass substrate is placed on a table 11 of the scribing apparatus. The table 11 is provided with a plurality of absorption holes for making the brittle material substrate W stick fast to the substrate. The table 11 is moved in the Y direction by a Y axis moving mechanism 13 as moving mechanism provided on a base frame 12.

The Y axis moving mechanism 13 has a Y stage 14, a driving unit 15, such as a linear motor or ball screw mechanism, for driving the Y stage 14 in the Y direction and a linear guide 16 for guiding linear movement of the Y stage 14 in the Y direction.

On the Y stage 14 of the Y axis moving mechanism 13, the table 11 is mounted thereon via a θ axis rotating mechanism 18 (not shown). The θ axis rotating mechanism 18 rotates the table 11 in the horizontal plane.

There is provided a column 22 on the base frame 12. The column 22 extends in the X direction that is a moving direction of a scribe head 24. The column 22 is provided with an X axis moving mechanism 25 as a moving mechanism for moving the scribe head 24 in the X direction.

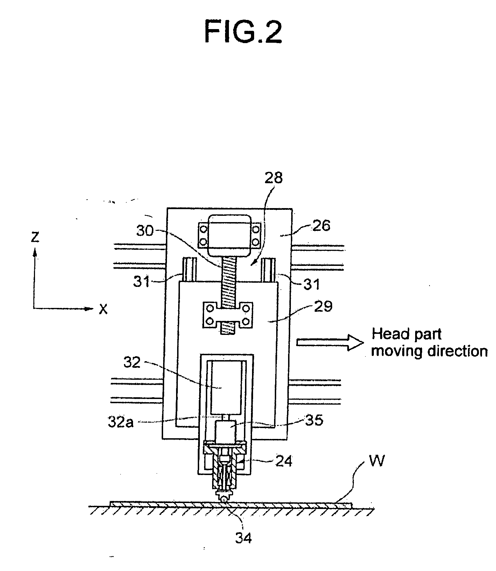

The X axis moving mechanism 25 has an X stage 26 (see Fig. 2), a driving unit such as a ball screw mechanism or a linear motor for driving the X stage 26 in the X direction and a linear guide 27 for guiding linear movement of the X stage 26 in the X direction.

Fig. 2 illustrates the scribe head 24 and a Z axis moving mechanism 28 mounted on the X stage 26 of the X axis moving mechanism 25. The Z axis moving mechanism 28 has a Z stage 29, a ball screw mechanism 30 for driving the Z stage in the Z direction and a linear guide 31 for guiding linear movement of the Z stage 29 in the Z direction.

The Z stage 29 is provided with a load cylinder 32 as a pressure mechanism. The load cylinder 32 has a rod 32a on which the scribe head 24 is mounted. The vertical movement of the scribe head 24 relative to the Z stage 29 is guided by a linear guide (not shown).

When a scribing wheel 34 of the scribe head 24 is moved down by the Z axis moving mechanism 28, the scribing wheel 34 is made to abut to the brittle material substrate W. The load cylinder 32 adjusts pressure of the scribing wheel 34 against the brittle material substrate W. The scribe head 24 is provided with a vibration actuator 35. The vibration actuator 35 adjusts amplitude and frequency of vibration of the scribing wheel 34. While the scribing wheel 34 abuts to the brittle material substrate W, the scribe head 24 is moved in the X direction by the X axis moving mechanism 25. Then, a scribe line extending in the X direction can be formed in the surface of the brittle material substrate W.

After forming of the scribing line in the X direction, the table is moved at a predetermined pitch in the Y direction and another scribe line extending in the X direction is formed again. Then, the plural scribe lines extending in the X direction and in parallel with each other can be formed. Besides, when the brittle material substrate W is rotated 90 degrees by the θ axis rotating mechanism, a plurality of scribe lines can be formed extending longitudinally and transversely.

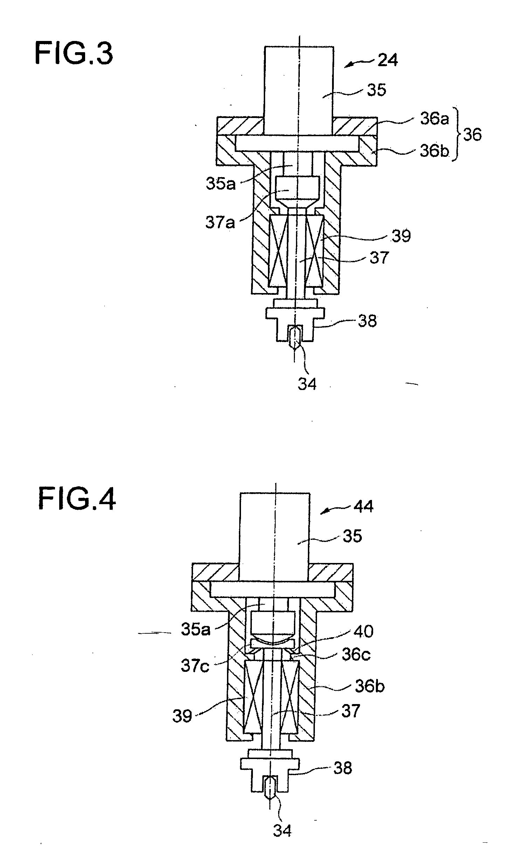

Fig. 3 is a cross sectional view of the scribe head 24. The scribe head 24 has the vibration actuator 35, a main body 36 on which the vibration actuator 35 is mounted, a holder 38 for holding the scribing wheel 34 rotatably, a spline shaft 37 for transmitting vibration of the vibration actuator 35 to the holder 38 and a spline outer cover 39 for guiding vibration of the spline shaft 37.

The main body 36 is made of two divided parts, that is, a lower tube part 36b and an upper cover part 36a, which are connected to each other. A flange of the vibration actuator 35 is sandwiched between the lower tube part 36b and the upper cover part 36a. The rod 35a of the vibration actuator 35 is connected to the spline shaft 37 via a connecting part 37a. In order to eliminate loss in vibration transmission, the road 35a of the vibration actuator 35 and the connecting part 37a of the spline shaft 37 are screwed. The spline shaft 37 extends vertically and its lower end is exposed on the lower tube part 36b. In order to reduce lateral displacement, vibration of the spline shaft 37 is guided by the spline outer cover 39. The spline outer cover 39 is held in the lower tube part 36b.

At a lower end of the spline shaft 37, the T-shaped holder 38 is attached thereto. The holder 38 is screwed to the spline shaft 37. The holder 38 has a bifurcated lower part. At the lower part of the holder 38, the rotational axis is provided and the scribing wheel 34 is supported rotatably by the rotational axis.

Fig. 4 illustrates another example of the scribe head. The scribe head 44 of this example is different from the scribe head 24 illustrated in Fig. 3 in that the vibration actuator 35 is separated from the spline shaft 37 in the scribe head 44. This is because the lateral displacement of the road 35a of the vibration actuator 37 is not transmitted to the spline shaft 37 but longitudinal displacement is only transmitted to the spline shaft 37. As the vibration of the spline shaft 37 is made to follow vibration of the rod 35a, there is provided a conical spring 40 as a biasing unit for biasing the spline shaft 37 toward the rod 35a. The spring 40 is provided between a large-diameter part 37c at the upper end of the spline shaft 37 and a small-diameter part 36c at the midpoint of the lower tube part 36b.

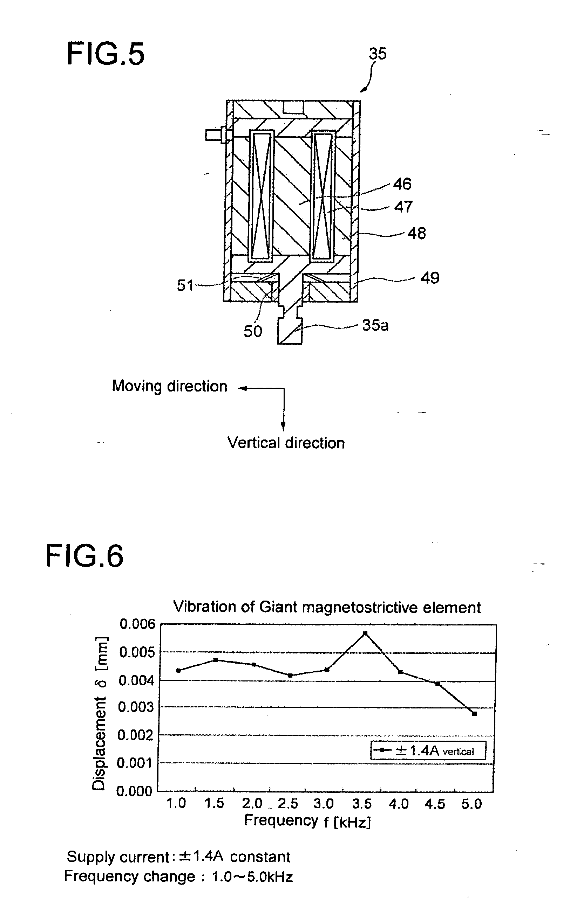

Fig. 5 is a cross sectional view of the vibration actuator 35. The vibration actuator 35 has a giant magnetostrictive element 46 for utilizing magnetostriction to convert electric vibration to mechanical vibration. In the cylindrical case of the vibration actuator 35, the giant magnetostrictive element 46, a coil 47 and a bias magnet 48 are held concentrically. The giant magnetostrictive element 46 changes its size in accordance with the magnetic field from the bias magnet 48 and the coil 47. When current passing through the coil 47 is oscillated with predetermined periodicity, the giant magnetostrictive element 46 also vibrates with the predetermined periodicity. Vibration of the giant magnetostrictive element 46 is transmitted to the rod 35a provided at the lower part of the case 49. Vibration of the rod 35a is guided by a linear bearing 50. At the bottom of the case 49, a conical spring 51 is provide for making the vibration of the rod 35a follow the vibration of the giant magnetostrictive element 46.

Fig. 6 is a graph illustrating an example of vibration characteristic of the giant magnetostrictive element 46. The horizontal axis indicates frequencies of AC and the vertical axis indicates displacement amounts. In this example, the coil of the vibration actuator 35 is supplied with AC of ± 1.4 A. The vertical axis indicates displacement amounts when the AC frequency varies in a range of 1 to 5 kHz. In the graph of Fig. 6, the vertical displacement of Fig. 5 is illustrated. From this graph, there is found a small peak of the vertical displacement around the frequency of 3.5 kHz, but stable displacement can be achieved even with change in frequency.

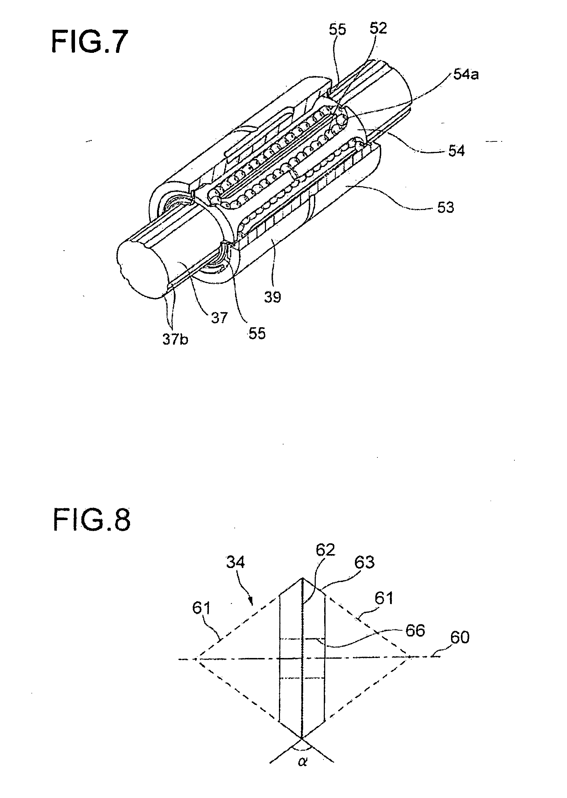

Fig. 7 illustrates a spline device having the spline outer cover 39 and the spline shaft 37. The spline shaft 37 has a plurality of ball rolling grooves 37b as rolling-element rolling grooves formed on the outer peripheral surface thereof extending in the axial direction. The spline shaft 37 is made of carbon steel, chrome steel, or stainless steel. As balls 52 roll on the ball rolling grooves 37b, the ball rolling grooves 37b are subjected to grinding and heat treating.

The spline outer cover 39 has a tube body 53 loosely fit with the spline shaft 37, a plurality of balls 52 provided rollably between the tube body 53 and the spline shaft 37, and a holder 54 provided in the tube body 53 and having a circuit ball circulation passage (rolling-element circulation passage) for circulating the plural balls 52.

On the inner peripheral surface of the tube body 53, a plurality of loaded ball rolling grooves (loaded rolling-element rolling grooves) is formed facing the ball rolling grooves 37b of the spline shaft 37 and extending in the axial direction. The tube body 53 is made of carbon steel, chrome steel or stainless steel. As the balls 52 roll on the loaded ball rolling grooves, the ball rolling grooves are subjected to grinding and heat treating. At each axial end of the tube body 53, a stop ring 55 is provided for mounting the holder 54 on the tube body 53. In the holder 54, the circuit ball circulation passage 54a is formed. The circuit ball circulation passage 54a has a loaded ball rolling passage between the ball rolling groove 37b and the loaded ball rolling groove, a pair of U-shaped direction change passages and a return passage extending in parallel with the loaded ball rolling passage.

As the spline shaft 37 moves linearly relative to the spline outer cover 39, the balls 52 roll between the ball rolling groove 37b of the spline shaft 37 and the loaded ball rolling groove of the tube body 53. Once each ball rolls up to an end of the loaded ball rolling groove of the tube body 53 in the longitudinal direction, the ball is scooped up from the ball rolling groove 37b by the holder 54. Then, the ball 52 passes through the U-shaped direction change passage of the holder 54, changes its direction and enters the return passage extending in parallel with the loaded ball rolling groove. After passing through the return passage, the ball rolls in the opposite-side direction change passage and returns to the ball rolling groove 37b.

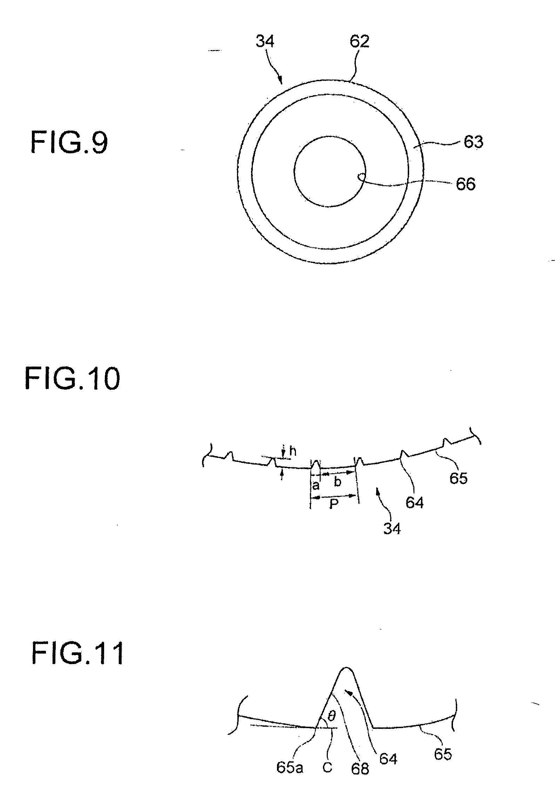

Figs. 8 and 9 illustrate the scribing wheel 34. Fig. 8 is a front view of the scribing wheel 34 seen in the travelling direction thereof and Fig. 9 is a side view of Fig. 8. The scribing wheel 34 has an outer peripheral edge 63 having a circumference ridge line 62 formed of crossed bottom parts of two cone frustums 61 sharing the rotational axis 60, a plurality of notches 64 and projections 65 (see Fig. 10) formed in the circumferential direction along the circumference ridge line 62. The circumference ridge line 62 is formed by grinding from the shaft center to the radially outside, and after grinding of the outer peripheral edge 63, grinding striations remain on the surface of the outer peripheral edge 63. The outer peripheral edge 63 is formed having a convergent angle (α).

The scribing wheel 34 is a disc-shaped wheel having an axial hole 66 through which a pin (not shown) passes for supporting the scribing wheel 34. The scribing wheel 34 is preferably made of sintered hard alloy, sintered diamond, ceramics or cermet.

The outer peripheral edge 63 is composed of inclined planes of two cone frustums 61. Due to grinding for forming of the circumference ridge line 62, there remain grinding striations on the outer peripheral edge 63. Working is performed in such a manner that the center line average roughness Ra of the inclined plane is 0.45 or less. Here, the "center line average roughness Ra" is one of parameters denoting the surface roughness of industrial products specified under JIS B 0601, and an arithmetic average extracted at random from surface roughness values of an object. The circumference ridge line 62 has microscopic projections and depressions formed by the above-mentioned grinding striations on the inclined surfaces of the cone frustums 61 that form the outer peripheral edge 63. The center line average roughness Ra of the projections and depressions is 0.40 µm or less.

Figs. 10 and 11 are partial enlarged views of Fig. 9. The notches 64 of the scribing wheel 34 are formed with a pitch P and their length a in the circumferential direction is shorter than the length b of each of the projections 65 in the circumferential direction. Each projection 65 is formed of a part (projection) of the circumference ridge line 62 having a length in the circumferential direction that is left after notching of the circumference ridge line 62.

Each notch 64 is formed by notching the flat circumference ridge line 62 to form a substantially V-shaped groove having a depth h. The notches 64 are formed with a pitch P. As the notches 64 are thus formed, the projections 65 of height h are formed on the circumference ridge line 62 with the pitch P.

The part of the projections 65 corresponding to the circumference ridge line 62 has microscopic depressions and projections formed by the grinding striations on the inclined surface of the cone frustums 61. The center line average roughness Ra of the depressions and projections is 0.40 µm or less.

As illustrated in Fig. 11, the notch 64 has a notched surface 68 that is cut in the radially inward direction of the bottom of the scribing wheel 34 and the notched surface 68 forms an angle (θ) of 30 to 60 degrees relative to the tangent line at the edge 65a of each projection 65.

In other words, when the tangent line C at the edge 65a of each projection 65 forms a right or almost right angle relative to the notched surface 68, catching (biting) of the substrate surface is well at the edge of the projection 65, but wearing of the edge of the projection 65 is hastened. If the tangent line C at the edge of the projection 65 forms 30 degrees or less relative to the notched surface 68, catching of the substrate surface at the edge of the projection 65 is poor. As the angle (θ) is set in the range of 30 to 60 degrees, the scribing wheel 34 can achieve longer service life and catching of the scribing wheel 34 in the substrate surface can be maintained well.

Each notch 64 is approximately V shaped when seen in the axial direction of the cone frustum 61. Therefore, by changing the angle of the V shape, the length a in the circumferential direction of the notch 64 and the length b in the circumferential direction of the projection 65 can be easily adjusted while maintaining the depth h of the notch 64 (height of the projection 65) .

Next description is made about an example of the method of manufacturing of the scribing wheel 34. First, a cylindrical disk is prepared that is used as a mother body of the scribing wheel 34, and the outer peripheral edge 63 at each side of this cylindrical disk is formed by grinding. The inclined surfaces of two cone frustums 61 cross each other to form the circumference ridge line 62. The grain size of the grind stone to be used is determined in such a manner that the inclined surface of each cone frustum 61 has a center line average roughness Ra of 0.45 µm or less and the circumference ridge line 62 has depressions and projections of center line average roughness Ra 0.40 µm or less. The scribe line has a fixed narrow width by reducing the surface roughness of the circumference ridge line 62 and the inclined surfaces of the cone frustums 61.

Next, the notches 64 are formed in the circumference ridge line 62. As one example for forming of the notches 64, the notches 64 are formed in the outer peripheral edge 63 by radiation of laser light in such a manner that the shape of each notch 64 seen in the axial direction of the cone is V shape. According to this method, by changing the center angle of the V shape, the length a in the circumferential direction of the notches 64 and the length b in the circumferential direction of the projections 65 can be easily adjusted while maintaining the height of the projections 65 constant.

The specifications of the scribing wheel 34 including outer diameter of the scribing wheel 34, the pitch of the notches 64, the length a in the circumferential direction of each notch 64, the length b in the circumferential direction of each projection 65, the depth of each notch 64, the convergent angle (α) of the outer peripheral edge 63 and the like are determined appropriately in accordance with the type, thickness, heat history of the brittle material to cut, the desired quality of cut surface of the brittle material and the like.

As one example of the conditions of the scribing wheel 34, the outer diameter of the scribing wheel 34 is 1 to 20 mm, the pitch of the notches 64 is 20 to 5000 µm, the depth of each notch 64 is 0.5 to 5 µm and the convergent angle of the circumference ridge line 62 is 85 to 140 degrees. As more preferable conditions of the scribing wheel 34, the outer diameter of the scribing wheel 34 is 1 to 5 mm, the pitch of the notches 64 is 20 to 50 µm, the depth of each notch 64 is 1 to 3 µm and the convergent angle of the circumference ridge line 62 is 100 to 130 degrees.

Typically, when the scribing wheel 34 having deeper notches 64 is used, catch of the brittle material (less jumps at intersections particularly in cross scribing) tends to be well. For example, in view of catch of the brittle material, the depth of each notch 64 is preferably 2 to 3 µm. Meanwhile, when the scribing wheel 34 having shallow notches 64 is used, the quality of cut surfaces of the brittle material (end surface strength) tends to be improved. In view of the end surface strength, the depth of each notch 64 is preferably 1 to 2 µm.

Typically, when the scribing wheel 34 of which the pitch of the notches 64 is short (partition number is great) is used, the catch of the brittle material tends to be improved. In view of catch of the brittle material, the pitch of the notches 64 is preferably 20 to 1000 µm and this is suitable particularly when the substrate consisting of bonded glass plates is cut. Meanwhile, when the scribing wheel 34 of which the pitch of the notches 64 is long (partition number is small) is used, the quality of the cut surfaces of the brittle material (end surface strength) tends to be improved. In view of easy manufacturing of the scribing wheel 34, the pitch of the notches 64 is preferably 1000 to 5000 µm and this is suitable particularly when the substrate consisting of a single raw plate is cut.

Typically, in cutting of the substrate of bonded glasses, it is preferable that the scribing wheel 34 of small outer diameter is used and, for example, the scribing wheel 34 having an outer diameter of 1 to 4 mm is preferably used. Meanwhile, in the case of cutting of the substrate of single row plate, the scribing wheel 34 having a larger outer diameter is preferably used and for example, the scribing wheel 34 having an outer diameter of 4 to 20 mm is preferable.

Typically, when the scribing wheel 34 of which the length in the circumferential direction of each notch 64 is longer is used, catch of the brittle material tends to be well. In view of the catch of the brittle material, the length of each notch 64 in the circumferential direction preferably ranges from 4 to 14 µm and more preferably ranges from 7 to 12 µm. Meanwhile, when the scribing wheel 34 of which the length in the circumferential direction of each notch 64 is shorter is used, the quality of cut surfaces of the brittle material (end surface strength) tends to be improved. In view of the quality of cut surfaces of the brittle material, the length of each notch 64 in the circumferential direction preferably ranges from 1 to 6 µm and more preferably ranges from 1 to 5 µm.

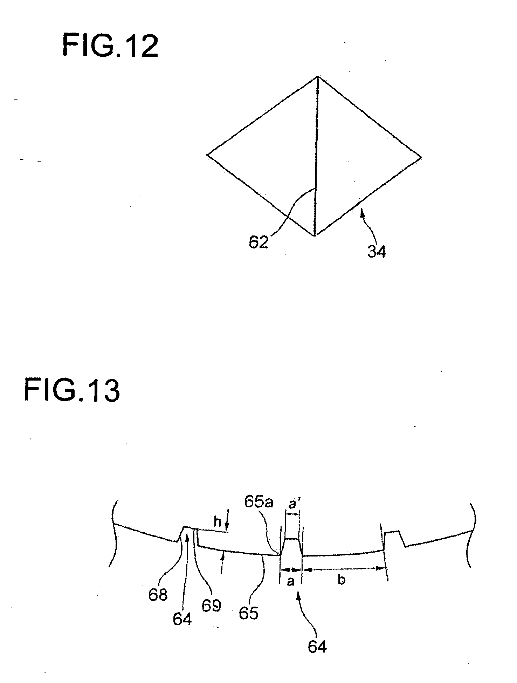

As illustrated in Fig. 13, each of the notches 64 may be trapezoidal when seen in the axial direction of the rotational axis 60. If the scribing wheel 34 has trapezoidal notches 64, the length a' of the bottom of the trapezoidal notch is changed thereby to be able to easily adjust the length a of each notch 64 in the circumferential direction and the length b of each projection 65 in the circumferential direction while maintaining fixed depth h of the notch 64 and without changing the angle of the notched surface 68 relative to the tangent line at the edge 65a of the projection 65. Here, in Fig. 13, the bottom 69 of the trapezoidal notch 64 is straight for easy explanation, but it may be a circular arc. For illustration, the notch 64 is approximately V shaped or trapezoidal when seen in the axial direction of the rotational axis 60, but this is not intended for limiting the present invention and the shape of each notch 64 may be a circular shape or approximately U shape.

In the above-described embodiment, the disc-shaped scribing wheel 34 is illustrated having an axial hole through which the pin passes for supporting the scribing wheel 34. However, as illustrated in Fig. 12, an integral type scribing wheel 34 in which the pin is formed integrally can be also included in the present invention.

Next description is made, with reference to Fig. 1, about the scribing method according to an exemplary embodiment of the present invention. Prepared is a scribing wheel 34 as described above, which is mounted on the scribe head 24. Then, a brittle material substrate W is placed on the table 11 and is stuck fast to the table 11. For positioning, an image pickup element such as a CCD camera or the like reads an alignment mark on the brittle material substrate W. Based on the positional information of the alignment mark that the image pickup element reads, the controller operates the X axis moving mechanism 25, the Y axis moving mechanism 13 and the θ axis rotating mechanism 18 to position the brittle material substrate W. After positioning the brittle material substrate W, the controller operates the X axis moving mechanism 25 and the Y axis moving mechanism 13 to move the scribe head 24 to the scribing start point on the brittle material substrate W.

Then, the controller operates the z axis moving mechanism 28 as illustrated in Fig. 2 to move the scribe head 24 down so that the scribing wheel 34 of the scribe head 24 abuts to the surface of the brittle material substrate W. Even after the scribing wheel 34 abuts to the surface of the brittle material substrate W, the controller controls the Z stage 29 slightly to attain a cut of a predetermined depth. The scribe head 24 is controlled not to move down after the scribing wheel 34 abuts to the surface of the brittle material substrate W.

Next, the controller operates the load cylinder 34 to press the scribing wheel 34 against the brittle material substrate W under a predetermined pressure. In this state, the controller operates the vibration actuator 35 to give the scribing wheel 34 vibration. Simultaneously with control of the vibration actuator 35, the controller operates the X axis moving mechanism 25 to move the scribe head 24 in the X direction. With the operation described up to this point, a scribed line is formed in the surface of the brittle material substrate W.

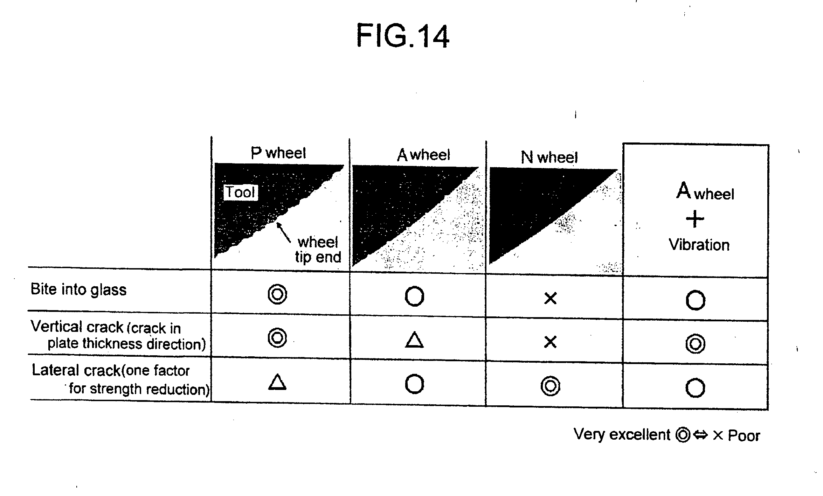

Fig. 14 illustrates comparison of characteristics of the scribing wheel 34 in terms of catch into the glass substrate as brittle material, vertical crack (median crack), and lateral crack. Evaluations are shown with marks of ⊚ → ○ → Δ → × expressing the quality from "very excellent" to "poor" in this order. The P wheel is excellent in catch into the glass substrate and deep vertical crack, however, there is likely to occur a lateral crack that may cause reduction in strength. The A wheel is excellent in catch into the glass substrate and there hardly occurs a lateral crack, however, the vertical crack cannot be formed deeper. The N wheel is excellent in lateral crack, however, it is poor in catch into the glass substrate and the vertical crack cannot be formed deeper

Thus, in order to prevent damage to the glass substrate and form a deeper vertical crack, the A wheel is used which has no problem in stable catch into the glass substrate and the A wheel is vibrated. With use of such an A wheel, it becomes possible to form a scribe line excellent in catch into the glass substrate, vertical crack and lateral crack. When using the P wheel, the vertical crack can be formed deeper without vibrating the P wheel, and therefore, it is practically unnecessary to give vibration. Even if the P wheel is vibrated, there may occur many lateral cracks that causes reduction in strength.

In the present exemplary embodiment, the scribing wheel 34 that is not vibrated is pressed by the load cylinder 32 against the brittle material substrate W with pressure of 0.1 to 0.3 MPa. Then, the vibration actuator 35 vibrates the scribing wheel 34 with amplitude of 5 to 20 µm when he scribing wheel 34 is away from the surface of the brittle material substrate W and with frequency of 1 to 5 kHz during working. The amplitude of the scribing wheel 34 when the scribing wheel 34 is away from the surface of the brittle material substrate W can be measured by a laser displacement meter. The frequency of the scribing wheel 34 can be obtained from an AC frequency supplied to the vibration actuator 35.

### [EXAMPLES]

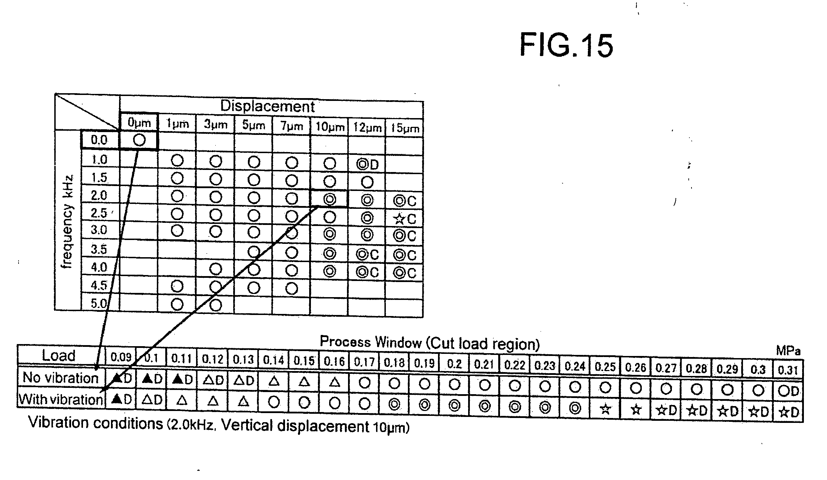

Figs. 15 to 20 illustrate experimental data in scribing the hard glass actually.

In Figs. 15 to 20, the symbols denote the following states of the scribed line.
× : The substrate is undividable or broken.
▲ : No rib mark is formed or an unstable rib mark is formed.
Δ : Shallow crack is formed without jump of rib mark.
○ : Crack is formed well although it is inferior to that formed by the P wheel.
⊚ : Crack is formed like that formed by the P wheel.
* (open star) : The substrate is divided naturally after absorption is released or divided only by touch.
D : Defect in cross section (flaw, undulation)
C : Chipping occurs.

Fig. 15 illustrates experimental data when scribing a hard glass having a thickness t = 0. 7 mm with use of a vibrating A wheel. The experimental conditions are: tip end tool: A wheel ϕ2.0 ×0.65 × ϕ0.8, 130°, work: hard glass t 0.7, vibration head: connection type (see Fig. 3), scribing conditions: load 0.18 MPa (12.6N), speed 300 mm/s, cut depth 0.15 mm.

In the experimental data of Fig. 15, the load, frequency and deformation (amplitude) of the A wheel tip end when it is away from the surface of the hard glass are changed. It has been found from Fig. 15 that when the deformation is 5 µm or more, the vertical crack can be formed well irrespective of frequency and particularly, when the deformation is 10 µm or more, the deep-cut crack formation or full cut can be made by selecting the frequency.

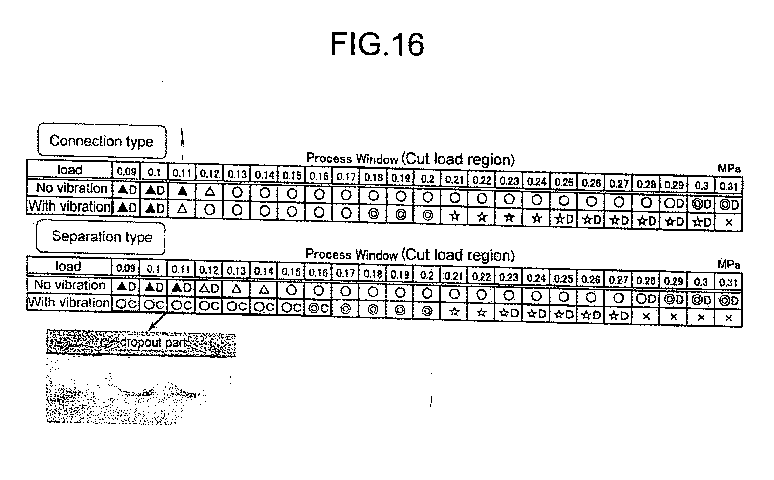

Fig. 16 illustrates experimental data when scribing a hard glass having a thickness t = 0.5 mm with use of a vibrating A wheel. The experimental conditions are: tip end tool: A wheel ϕ2.0 ×0.65 × ϕ0.8, 130°, work: hard glass t 0.5, vibration head: connection type (see Fig. 3), separation type (see Fig. 4), scribing conditions: speed 300 mm/s, cut depth 0.15 mm, no vibration, with vibration (2.0 kHz, vertical deformation 10 µm).

The scribe heads 24, 44 used are the connection type illustrated in Fig. 3 and the separation type illustrated in Fig. 4. It has been found from Fig. 16 that the deep vertical crack can be formed by vibrating the wheel irrespective of the type of the scribe head.

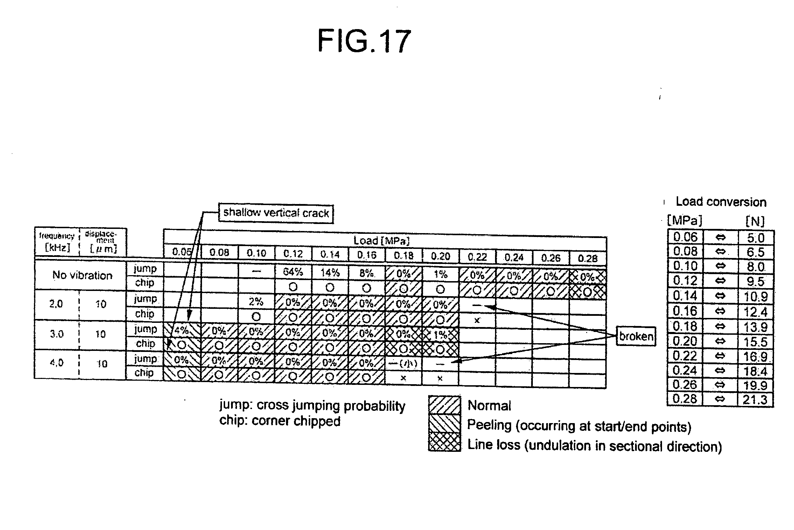

Fig. 17 illustrates experimental data when crosscutting a hard glass having a thickness t = 0.5 mm with use of a vibrating A wheel (connection type scribe head). The experimental conditions are: tip end tool: A wheel ϕ2.0 ×0.65 × ϕ0.8, 130°, work: hard glass t 0.5, vibration head: connection type, scribing conditions: speed 300 mm/s, cut depth 0.15 mm, no vibration, with vibration (2.0 to 4.0 kHz, 10 µm).

It has been found from Fig. 17 that when vibration of 2.0 kHz or more is given, cross jumping becomes 0 % in a lower load region even at low frequencies of 4.0 kHz or less, as compared with the case of no vibration and the 0 % cross jumping region is shifted to the lower load direction as the frequency becomes higher.

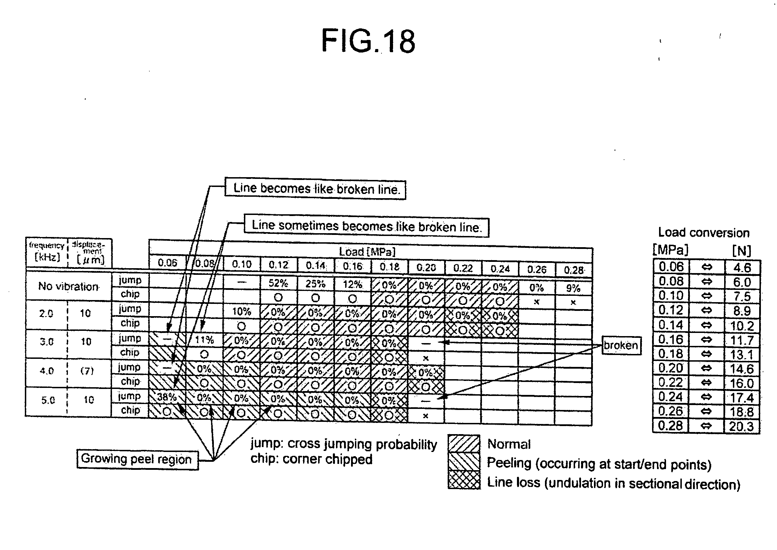

Fig. 18 illustrates experimental data when cross-cutting a hard glass having a thickness t = 0.5 mm with use of a vibrating A wheel (separation type scribe head). The experimental conditions are: tip end tool: A wheel ϕ2.0 ×0.65 × ϕ0.8, 130°, work: hard glass t 0.5, vibration head: separation type, scribing conditions: speed 300 mm/s, cut depth 0.15 mm, no vibration, with vibration (2.0 to 5.0 kHz, 10(7) µm).

It has been found from Fig. 18 that cross stepping becomes 0% at the low load region by giving vibration and no outstanding difference is found even as compared with the connection type.

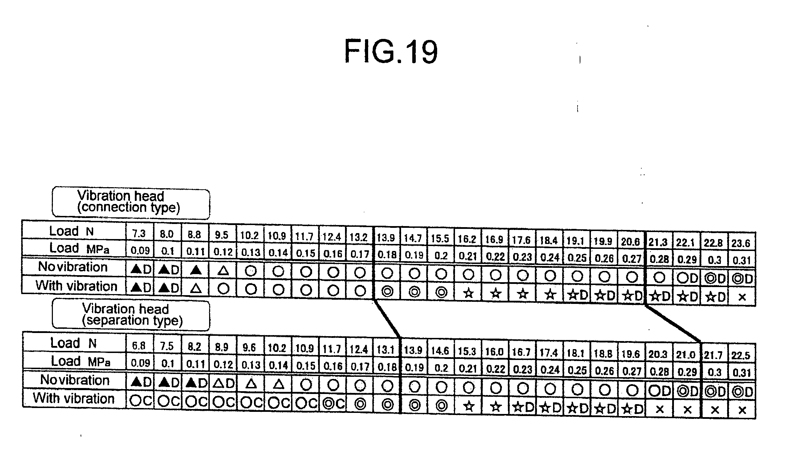

Fig. 19 illustrates experimental data for comparing scribing characteristics of heads when scribing a hard glass having a thickness t = 0.5 mm with use of a vibrating A wheel. The experimental conditions are: tip end tool: A wheel ϕ2.0 ×0.65 × ϕ0.8, 130', work: hard glass t 0.5, scribing conditions: speed 300 mm/s, cut depth 0.15mm, no vibration, with vibration (2.0 kHz, vertical deformation 10 µm).

It has been found that the load region where the deep vertical crack can be formed becomes lower by giving vibration irrespective of the scribe head type.

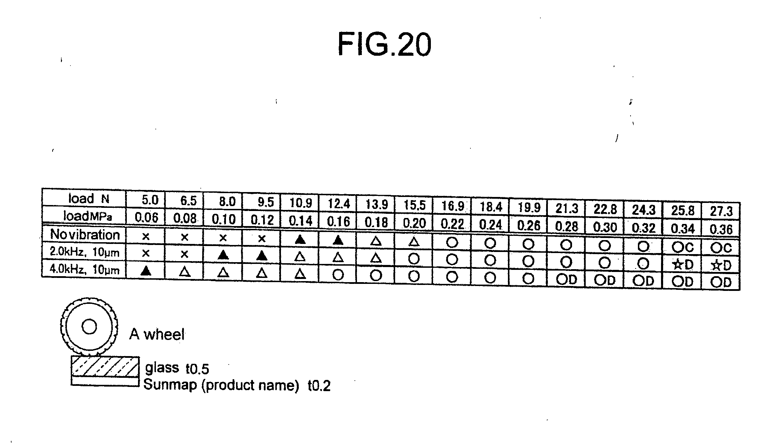

Fig. 20 illustrates experimental data when scribing a hard glass having a thickness t = 0. 5 mm with use of a vibrating A wheel. The experimental conditions are: tip end tool: A wheel cp2.0 ×0.65 × ϕ0.8, 130°, work: hard glass t 0.5, vibration head: connection type), scribing conditions: load 0.06 to 0.36 MPa (5.0 to 27.3 N) every 0.02 MPa, speed 300 mm/s, cut depth 0.15 mm, ultrahigh molecular weight polyethylene porous film (Sunmap (product name) t 0.2 mm) which is affixed to the glass lower part, vibration conditions: no vibration, with vibration (2.0 kHz, 4.0 kHz, vertical deformation 10 µm).

The ultrahigh molecular weight polyethylene porous film is affixed to the hard glass of t = 0.5 mm. It has been found from Fig. 20 that when the vibration of deformation 10 µm is given, a cut load region is enlarged and the cut load region is shifted to the low load direction as the frequency becomes higher.

## Claims

1. A scribing apparatus comprising:
a scribing wheel (34) having a circumference ridge line (62) formed of crossed bottom parts of two cone frustums (61) sharing a rotational axis (60), a plurality of notches (64) and projections (65) being formed alternately in a circumferential direction along the circumference ridge line(62), each of the projections (65) being a part of the circumference ridge line (62) remaining after notching the circumference ridge line (62) and having a length (b) in the circumferential direction, and each of the notches (64) having a length (a) in the circumferential direction being shorter than the length (b) of the projection (65) in the circumferential direction;
a scribe head (24, 44) holding the scribing wheel (34) to be rotatable around the rotational axis (60) and having a vibration actuator (35) for vibrating the scribing wheel (34) in a direction crossing a surface of a brittle material substrate (W); and
a moving mechanism (13, 25) for moving the scribe head (24, 44) along the surface of the brittle material substrate (W),
**characterized in that** the vibration actuator (35) vibrates the scribing wheel (34) with frequency of 1 to 5 kHz and amplitude of 5 to 20 µm when the scribing wheel (34) is away from the surface of the brittle material substrate (W), and the scribing apparatus further comprises a pressure mechanism for pressing the scribing wheel (34) against the brittle material substrate (W) with pressure of 0.1 to 0.3 MPa and
the vibration actuator (35) has a giant magnetostrictive element(46) that utilizes magnetostriction to convert electric vibration to mechanical vibration.

2. The scribing apparatus according to claim 1, **characterized in that** the scribe head (24, 44) has a main body (36) for mounting the vibration actuator (35) thereon, a holder (38) for holding the scribing wheel (34) rotatable around the rotational axis (60), a spline shaft (37) provided for transmitting vibration of the vibration actuator (35) to the holder (38) and having a rolling-element rolling groove (37b) formed on an outer peripheral surface thereof extending in an axial direction, a spline outer cover (39) provided on the main body (36) for guiding vibration of the spline shaft (37) and having a rolling-element circulation passage (54a) including a loaded rolling-element rolling groove extending in the axial direction facing the rolling-element rolling groove (37b) of the spline shaft (37), and a plurality of rolling elements (52) arranged in the rolling-element circulation passage (54a) of the spline outer cover (39).

3. A scribing method comprising: preparing a scribing wheel (34) having a circumference ridge line (62) formed of crossed bottom parts of two cone frustums (61) sharing a rotational axis (60), a plurality of notches (64) and projections (65) being formed alternately in a circumferential direction along the circumference ridge line (62), each of the projections (65) being a part of the circumference ridge line (62) remaining after notching the circumference ridge line (62) and having a length (b) in the circumferential direction, and each of the notches (64) having a length (a) in the circumferential direction being shorter than the length (b) of the projection (65) in the circumferential direction; and vibrating the scribing wheel (34) in a direction crossing a surface of a brittle material substrate (W) to roll the scribing wheel (34) on the surface of the brittle material substrate (W),
**characterized in that** the scribing wheel (34) is vibrated with frequency of 1 to 5 kHz and amplitude of 5 to 20 µm when the scribing wheel (34) is away from the surface of the brittle material substrate (W), and scribing wheel (34) is pressed against the brittle material substrate (W) with pressure of 0.1 to 0.3 MPa and the vibration actuator (35) has a giant magnetostrictive element (46) that utilizes magnetostriction to convert electric vibration to mechanical vibration.

## Patentansprüche

1. Ritzvorrichtung, umfassend:
ein Ritzrad (34), das eine Umfangsgratlinie (62) aufweist, die von gekreuzten Bodenteilen zweier Kegelstümpfe (61) mit gemeinsamer Drehachse (60) gebildet wird, eine Mehrzahl von Kerben (64) und Vorsprüngen (65), die abwechselnd in einer Umfangsrichtung entlang der Umfangsgratlinie (62) ausgebildet sind, wobei jeder der Vorsprünge (65) ein nach dem Kerben der Umfangsgratlinie (62) verbleibender Teil der Umfangsgratlinie (62) ist und eine Länge (b) in der Umfangsrichtung aufweist, und jede der Kerben (64) in der Umfangsrichtung eine Länge (a) aufweist, die kürzer als die Länge (b) des Vorsprunges (65) in der Umfangsrichtung ist;
einen Ritzkopf (24, 44), der das Ritzrad (34) drehbar um die Drehachse (60) hält und
einen Vibrationsbetätiger (35) zum Invibrationversetzen des Ritzrades (34) in einer Richtung, die eine Oberfläche eines Sprödmaterialsubstrats (W) kreuzt, aufweist; und
einen Bewegungsmechanismus (13, 25) zum Bewegen des Ritzkopfes (24, 44) entlang der Oberfläche des Sprödmaterialsubstrates (W),
**dadurch gekennzeichnet, dass** der Vibrationsbetätiger (35) das Ritzrad (34) mit einer Frequenz von 1 bis 5 kHz und einer Amplitude von 5 bis 20 µm in Vibration versetzt,
wenn das Ritzrad (34) entfernt von der Oberfläche des Sprödmaterialsubstrates (W) ist, wobei die Ritzvorrichtung des Weiteren einen Pressmechanismus zum Pressen des Ritzrades (34) gegen das Sprödmaterialsubstrat (W) mit einem Druck von 0,1 bis 0,3 MPa umfasst und
der Vibrationsbetätiger (35) ein magnetostriktives Großelement (46) aufweist, das Magnetostriktion zum Umwandeln von elektrischer Vibration in mechanische Vibration nutzt.

2. Ritzvorrichtung nach Anspruch 1, **dadurch gekennzeichnet, dass** der Ritzkopf (24, 44) aufweist: einen Hauptkörper (36) zum Montieren des Vibrationsbetätigers (35) daran, einen Halter (38) zum drehbar um die Drehachse (60) erfolgenden Halten des Ritzrades (34), eine Keilwelle (37), die vorgesehen ist zum Übertragen einer Vibration des Vibrationsbetätigers (35) auf den Halter (38) und eine Rollelementrollnut (37b) aufweist, die an einer sich in einer axialen Richtung erstreckenden äußeren Umfangsoberfläche hiervon ausgebildet ist, eine Keilaußenabdeckung (39), die an dem Hauptkörper (36) vorgesehen ist zum Führen einer Vibration der Keilwelle (37) und einen Rollelementumlaufdurchgang (54a) aufweist, der eine Lastrollelementrollnut beinhaltet, die sich in der axialen Richtung mit Orientierung zu der Rollelementrollnut (37b) der Keilwelle (37) erstreckt, und eine Mehrzahl von Rollelementen (52), die in dem Rollelementumlaufdurchgang (54a) der Keilaußenabdeckung (39) angeordnet sind.

3. Ritzverfahren, umfassend: Präparieren eines Ritzrades (34), das eine Umfangsgratlinie (62) aufweist, die von gekreuzten Bodenteilen zweier Kegelstümpfe (61) mit gemeinsamer Drehachse (60) gebildet wird, eine Mehrzahl von Kerben (64) und Vorsprüngen (65), die abwechselnd in einer Umfangsrichtung entlang der Umfangsgratlinie (62) ausgebildet sind, wobei jeder der Vorsprünge (65) ein nach dem Kerben der Umfangsgratlinie (62) verbleibender Teil der Umfangsgratlinie (62) ist und eine Länge (b) in der Umfangsrichtung aufweist, und jede der Kerben (64) in der Umfangsrichtung eine Länge (a) aufweist, die kürzer als die Länge (b) des Vorsprunges (65) in der Umfangsrichtung ist; und Invibrationversetzen des Ritzrades (34) in einer Richtung, die eine Oberfläche eines Sprödmaterialsubstrats (W) kreuzt, um das Ritzrad (34) an der Oberfläche des Sprödmaterialsubstrates (W) abzurollen,
**dadurch gekennzeichnet, dass** das Ritzrad (34) mit einer Frequenz von 1 bis 5 kHz und einer Amplitude von 5 bis 20 µm in Vibration versetzt wird, wenn das Ritzrad (34) entfernt von der Oberfläche des Sprödmaterialsubstrates (W) ist, wobei das Ritzrad (34) gegen das Sprödmaterialsubstrat (W) mit einem Druck von 0,1 bis 0,3 MPa gepresst wird und der Vibrationsbetätiger (35) ein magnetostriktives Großelement (46) aufweist,
das Magnetostriktion zum Umwandeln von elektrischer Vibration in mechanische Vibration nutzt.

## Revendications

1. Appareil de traçage comprenant :
une roue de traçage (34) ayant une ligne d'arête de circonférence (62) formée de parties inférieures croisées de deux troncs de cône (61) partageant un axe de rotation (60), une pluralité d'entailles (64) et de projections (65) formées alternativement dans une direction circonférentielle le long de la ligne d'arête de circonférence (62), chacune des projections (65) constituant une partie de la ligne d'arête de circonférence (62) restante après entaillage de la ligne d'arête de circonférence (62) et ayant une longueur (b) dans la direction circonférentielle, et chacune des entailles (64) ayant une longueur (a) dans la direction circonférentielle plus courte que la longueur (b) de la projection (65) dans la direction circonférentielle ;
une tête de traçage (24, 44) maintenant la roue de traçage (34) pour pouvoir tourner autour de l'axe de rotation (60) et comportant un dispositif d'actionnement de vibrations (35) pour faire vibrer la roue de traçage (34) dans une direction croisant une surface d'un substrat en matériau fragile (W) ; et
un mécanisme de déplacement (13, 25) pour déplacer la tête de traçage (24, 44) sur la surface du substrat en matériau fragile (W),
**caractérisé en ce que** le dispositif d'actionnement de vibrations (35) fait vibrer la roue de traçage (34) à une fréquence de 1 à 5 kHz et une amplitude de 5 à 20 µm lorsque la roue de traçage (34) est éloignée de la surface du substrat en matériau fragile (W), et l'appareil de traçage comprend en outre un mécanisme de pression pour presser la roue de traçage (34) contre le substrat en matériau fragile (W) avec une pression de 0,1 à 0,3 MPa ; et
le dispositif d'actionnement de vibrations (35) comporte un élément magnétostrictif géant (46) qui utilise la magnétostriction pour convertir une vibration électrique en vibration mécanique.

2. Appareil de traçage selon la revendication 1, **caractérisé en ce que** la tête de traçage (24, 44) possède un corps principal (36) pour y monter le dispositif d'actionnement de vibrations (35), un support (38) pour maintenir la roue de traçage (34) pour tourner autour de l'axe de rotation (60), un arbre cannelé (37) prévu pour transmettre au support (38) les vibrations du dispositif d'actionnement de vibrations (35) et comportant une rainure de roulement pour élément roulant (37b) formée sur sa surface périphérique externe s'étendant dans une direction axiale, un capot externe cannelé (39) prévu sur le corps principal (36) pour guider les vibrations de l'arbre cannelé (37) et comportant un passage de circulation pour élément roulant (54a) incluant une rainure de roulement pour élément roulant chargé s'étendant dans la direction axiale tourné vers la rainure de roulement pour élément roulant (37b) de l'arbre cannelé (37), et une pluralité d'éléments de roulement (52) agencés dans le passage de circulation pour élément roulant (54a) du capot externe cannelé (39).

3. Procédé de traçage comprenant : la préparation d'une roue de traçage (34) ayant une ligne d'arête de circonférence (62) formée de parties inférieures croisées de deux troncs de cône (61) partageant un axe de rotation (60), une pluralité d'entailles (64) et de projections (65) formées alternativement dans une direction circonférentielle le long de la ligne d'arête de circonférence (62), chacune des projections (65) constituant une partie de la ligne d'arête de circonférence (62) restante après entaillage de la ligne d'arête de circonférence (62) et ayant une longueur (b) dans la direction circonférentielle, et chacune des entailles (64) ayant une longueur (a) dans la direction circonférentielle plus courte que la longueur (b) de la projection (65) dans la direction circonférentielle ; et la vibration de la roue de traçage (34) dans une direction croisant une surface d'un substrat en matériau fragile (W) pour faire rouler la roue de traçage (34) sur la surface du substrat en matériau fragile (W),
**caractérisé en ce qu'**on fait vibrer la roue de traçage (34) a une fréquence de 1 à 5 kHz et une amplitude de 5 à 20 µm lorsque la roue de traçage (34) est éloignée de la surface du substrat en matériau fragile (W), et on presse la roue de traçage (34) contre le substrat en matériau fragile (W) avec une pression de 0,1 à 0,3 MPa, et le dispositif d'actionnement de vibrations (35) comporte un élément magnétostrictif géant (46) qui utilise la magnétostriction pour convertir une vibration électrique en vibration mécanique.
